(19) Europäisches Patentamt / European Patent Office / Office européen des brevets

(11) **EP 4 622 092 B1**

(12) **EUROPEAN PATENT SPECIFICATION**

(45) Date of publication and mention
of the grant of the patent:
**17.06.2026 Bulletin 2026/25**

(21) Application number: **25164372.2**

(22) Date of filing: **18.03.2025**

(51) International Patent Classification (IPC):
*H02P 6/15* (2016.01)     *E05F 15/70* (2015.01)
*E05F 15/632* (2015.01)

(52) Cooperative Patent Classification (CPC):
**E05F 15/70; H02P 6/15; H02P 6/153;** E05F 15/632;
E05Y 2400/334; E05Y 2400/336; E05Y 2400/337;
E05Y 2400/36; E05Y 2400/40; E05Y 2900/531

(54) **MOTOR CONTROL DEVICE**

MOTORSTEUERUNGSVORRICHTUNG

DISPOSITIF DE COMMANDE DE MOTEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.03.2024 JP 2024046249
18.02.2025 JP 2025024174**

(43) Date of publication of application:
**24.09.2025 Bulletin 2025/39**

(73) Proprietor: **Mitsuba Corporation
Kiryu-shi, Gunma 376-8555 (JP)**

(72) Inventor: **Irisawa, Kazuki
Kiryu-shi, Gunma 376-8555 (JP)**

(74) Representative: **Becker Kurig & Partner
Patentanwälte mbB
Bavariastraße 7
80336 München (DE)**

(56) References cited:
**US-A1- 2020 291 705**

**Description**

**BACKGROUND**

Technical Field

The invention relates to a motor control device for controlling a drive motor to automatically open and close an opening and closing body of a vehicle.

Description of Related Art

Conventionally, in a motor control device for controlling a drive motor for automatically opening and closing an opening and closing body, such as a sliding door, included in a vehicle, an advance angle control may be exerted to set an advance angle value for advancing the phase of a motor control signal.

JP6939447B2 describes a vehicle opening and closing body control device that performs an automatic opening and closing operation to automatically open and close an opening and closing body of a vehicle through driving of a motor, and an assisted opening and closing operation to open and close the opening and closing body by assisting a manual operation force applied to the opening and closing body by using the drive force of the motor. In the vehicle opening and closing body control device, at the time of the assisted opening and closing operation, the advance angle value for advancing the phase of the motor drive signal is set further than that during the automatic opening and closing operation.

More specifically, JP6939447B2 discloses that during the assisted opening and closing operation, the rotational speed of the motor in the case where the movement speed of the sliding door changes due to the manual operation force of the user is obtained, and an advance angle value is set according to the obtained rotational speed of the motor. Additionally, Patent Document 1 describes that during the automatic opening and closing operation, the advance angle value is either not set or set to a smaller value than that during the assisted opening and closing operation.

[Prior Art Document(s)]

[Patent Document(s)]

[Patent Document 1] JP6939447B2
US 2020/291705 A1 discloses a control apparatus controlling an opening and closing member for a vehicle including a drive control unit operating an opening and closing member of the vehicle by a motor serving as a drive source, and a catch detection unit detecting a catch of a foreign object caught by the opening and closing member in response to a current value of the motor. The drive control unit includes a motor control signal output unit outputting a motor control signal for supplying a drive power to the motor, and an advance-angle value setting unit setting an advance-angle value for advancing a phase of the motor control signal. The advance-angle value setting unit includes an advance-angle value increase prohibition unit prohibiting increase setting of the advance-angle value in a case where the current value of the motor reaches an advance-angle value increase prohibition current value.

SUMMARY

[Issues to be solved by the invention]

In the invention described in Patent Document 1, during the assisted opening and closing operation, the advance angle value is set according to the rotational speed of the motor, which changes due to the manual operation force of the user. This makes it easier to more appropriately control the opening and closing operation of the opening and closing body. On the other hand, when automatically opening and closing the opening and closing body without relying on the user's manual operation force, it is assumed that the advance angle value is either not set or set to a fixed value. Therefore, depending on the operation state of the opening and closing body, such as the location and environment where the opening and closing body of the vehicle is automatically opened and closed, or the position of the opening and closing body during automatic opening and closing, there is a risk that the opening and closing body may not operate smoothly.
An objective of the invention is to provide a motor control device that can more appropriately control the drive motor to smoothly automatically open and close the opening and closing body of the vehicle regardless of the operation state. The present invention is defined in claim 1. Further details are provided in the other appended claims. The following disclosure serves a better understanding of the present invention.

[Means for solving the issues]

The invention provides a motor control device. The motor control device controls a motor connected with an opening and closing body of a vehicle and provided for automatically opening and closing the opening and closing body. The motor control device includes: a control signal generation unit, generating a motor control signal for supplying drive power to the motor; an advance angle value setting unit, setting an advance angle value for advancing a phase of the motor control signal; an operation state detection unit, detecting an operation state of the opening and closing body, and an advance angle value change unit, changing the advance angle value set by the advance angle value setting unit in accordance with the operation state of the opening and closing body detected by the operation state detection unit. The control advance angle value is calculated by adding an additional advance angle value to a basic advance angle value that is a fixed value set in advance, and the advance angle value setting unit sets the additional advance angle value in accordance with the operation state of the opening and closing body detected by the operation state detection unit.

[Inventive effects]

According to the motor control device of the invention, it is possible to more appropriately control the drive motor to smoothly automatically open and close the opening and closing body of the vehicle regardless of the operation state.

## BRIEF DESCRIPTION OF THE DRAWINGS

FIG. 1 is a side view showing a schematic configuration example of a vehicle equipped with a motor control device according to an embodiment.

FIG. 2 is a plan view showing a configuration example of the vehicle opening and closing body control device including the motor control device according to an embodiment.

FIG. 3 is a front view showing a configuration example of a drive unit included in the vehicle opening and closing body control device.

FIG. 4 is a perspective view showing a configuration example of a drum included in the drive unit.

FIG. 5 is a schematic diagram showing a configuration example of main components of the motor control device according to an embodiment.

FIG. 6 is a flowchart showing an example of a procedure for setting and changing a control advance angle value.

FIG. 7A is a diagram showing an example of a table defining a relationship between an actual operation speed of the sliding door and an additional advance angle value.

FIG. 7B is a diagram showing an example of a table defining a relationship between the actual operation speed of the sliding door and a control advance angle value.

FIG. 8 is a diagram showing an example of a map defining a relationship between an actual operation speed, an output duty, and a correction amount.

FIG. 9 is a diagram showing an example of a relationship between a door position of the sliding door and a target speed.

FIG. 10 is a diagram explaining the transition between startup setting control and normal setting control.

FIG. 11 is a flowchart explaining an example of startup setting control by an advance angle value setting unit.

## DESCRIPTION OF THE EMBODIMENTS

The following describes in detail an embodiment of the invention with reference to the drawings.

<Overview of the power sliding door device>

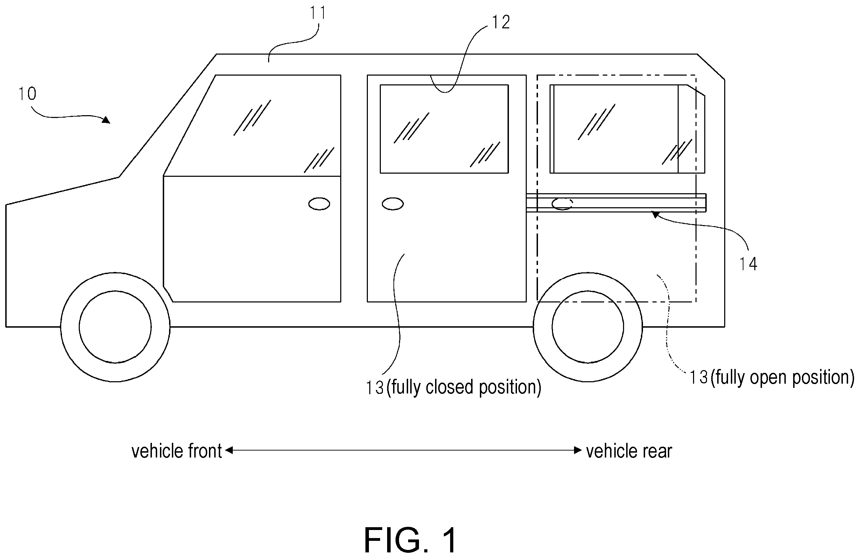

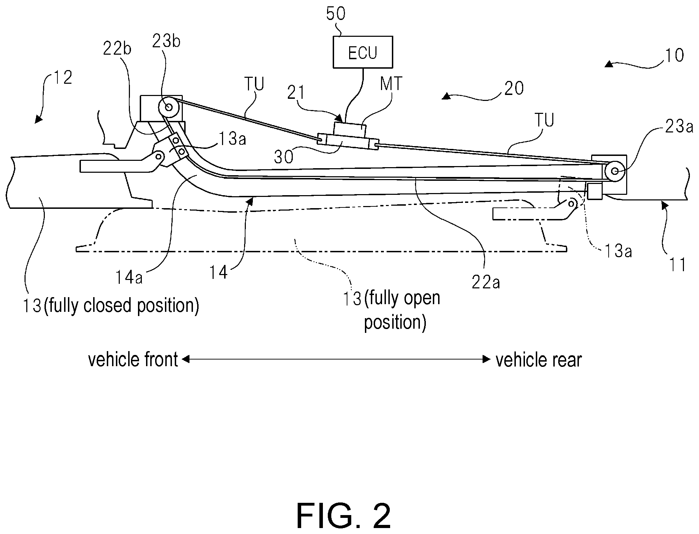

FIG. 1 is a side view showing a schematic configuration example of a vehicle equipped with a power sliding door device according to an embodiment of the disclosure. FIG. 2 is a plan view showing a configuration example of a power sliding door device in FIG. 1.

A vehicle 10 shown in FIG. 1 is, for example, a one-box vehicle. A sliding door (opening and closing body) 13 is provided on a side of the vehicle body 11 forming the vehicle 10. The sliding door 13 opens and closes an opening 12 along a guide rail 14. As shown in FIG. 2, a roller assembly 13a is connected to the sliding door 13. The roller assembly 13a moves along the guide rail 14 fixed to the side of the vehicle body 11 together with the sliding door 13.

As a result, as shown in FIG. 1 and FIG. 2, the sliding door 13 opens and closes the opening 12 by moving in the front-rear direction of the vehicle 10 between "fully closed position" and "fully open position". Here, as shown in FIG. 2, an inlet part 14a curved toward the inner side of a vehicle compartment (upper side in the figure) is provided in a portion of the guide rail 14 on a vehicle front side. By guiding the roller assembly 13a into the inlet part 14a, the sliding door 13 closes the opening 12 and is accommodated in the same surface with respect to the side surface of the vehicle body 11. In detail, in addition to the guide rail 14 provided at the central part of the vehicle body 11, guide rails (not shown) are also provided in the upper and lower parts of the vehicle body 11.

As shown in FIG. 2, the vehicle 10 is mounted with a power sliding door device (vehicle opening and closing body control device) 20 that automatically opens and closes the sliding door 13. The power sliding door device 20 is, in the example, a cable-type opening and closing device, and includes a drive unit 21 having a drive motor 60, an opening side cable 22a, a closing side cable 22b, and an electronic control unit (ECU) 50 as a motor control device. The drive unit 21 is located, for example, in the vehicle compartment of the vehicle body 11 and approximately in at central part along the extension direction of the guide rail 14, and drives the sliding door 13 to open and close by using the drive motor 60. The ECU 50 controls the rotation of this drive motor 60. The motor control device (ECU) 50 will be described in detail later.

The opening side cable 22a and the closing side cable 22b are connected to the sliding door 13 both via the roller assembly 13a, and are responsible for transmitting the power of the drive unit 21 to the sliding door 13. Specifically, the opening side cable 22a is pulled into the drive unit 21 through a first reversing pulley 23a located on the rear side of the vehicle 10, and the closing side cable 22b is pulled into the drive unit 21 through a second reversing pulley 23b located on the front side of the vehicle 10. Accordingly, the drive unit 21 drives the sliding door 13 in the opening direction by winding the opening side cable 22a, and drives the sliding door 13 in the closing direction by winding the closing side cable s22b.

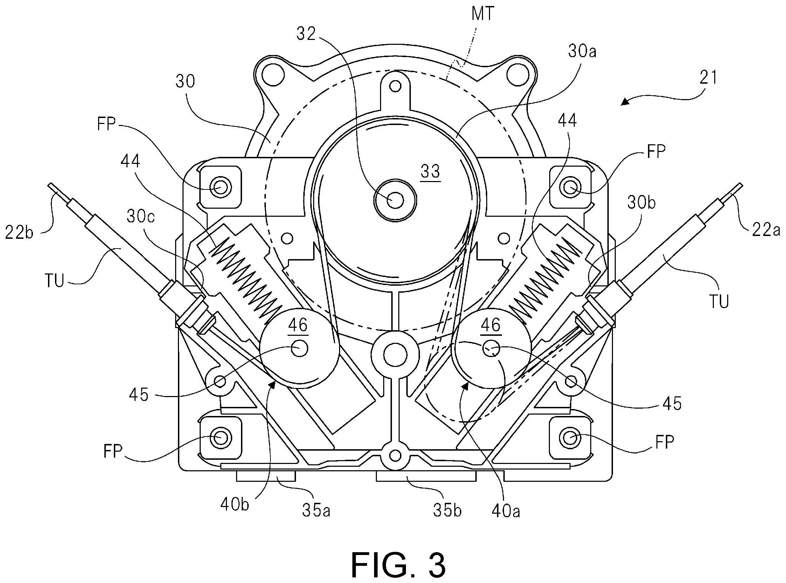

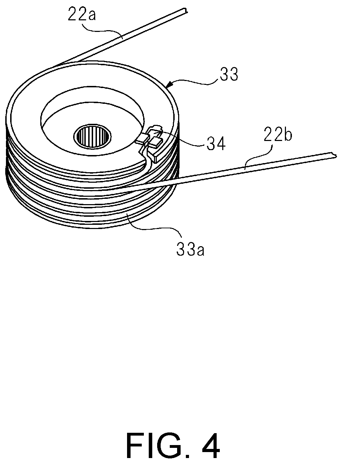

FIG. 3 is a front view showing an example configuration of the drive unit in FIG. 2, and FIG. 4 is a perspective view showing an example configuration of the drum in FIG. 3. The drive unit 21 shown in FIG. 3 includes a case 30 made of resin material such as plastic. The case 30 also functions as a frame that supports each component and mechanism forming the drive unit 21. The drive unit 21 is fixed to the vehicle body 11 (see FIG. 1 and FIG. 2) by using bolts, etc., (not shown) through four fixed parts FP provided on the case 30.

The case 30 is provided with the drive motor 60 that serves as the power source for the drive unit 21. The drive motor 60 is, for example, a flat-shaped brushless motor capable of rotating in both forward and reverse directions. By using a brushless motor as the drive motor 60, it is possible to suppress the increase in the thickness dimension of the drive unit 21. Inside the case 30 and in the vicinity of the drive motor 60, a deceleration mechanism (not shown) formed by a planetary gear reducer is provided. The deceleration mechanism decelerates the rotation of the drive motor 60 at a predetermined ratio to increase torque, and rotates the output shaft 32 with the high-torque driving force. In addition, in the approximate center part of the case 30, a drum accommodation chamber 30a formed in an approximately cylindrical shape is provided. The drum accommodation chamber 30a is positioned coaxially with respect to the drive motor 60, and a drum 33 is rotatably accommodated inside in the drum accommodation chamber 30a.

The drum 33, as shown in FIG. 4, is formed in an approximately cylindrically columnar shape with a spiral guide groove 33a on the outer circumferential surface, and the axis of the drum 33 is fixed to the output shaft 32 protruding into the drum accommodation chamber 30a. An end of the opening side cable 22a (and similarly for the closing side cable 22b) is fixed to the drum 33 by a stopper block 34. The opening side cable 22a is wound along the guide groove 33a from one side in the axial direction when the drum 33 rotates in a counterclockwise (CCW) manner. The closing side cable 22b is wound along the guide groove 33a from the other side in the axial direction in the case where the drum 33 rotates in a clockwise (CW) manner.

In FIG. 3, on the back side of the drum accommodation chamber 30a, and in the portion (lower part in the figure) closer to an opening side tensioner mechanism 40a and a closing side tensioner mechanism 40b, a substrate accommodation chamber (not shown) is provided. The substrate accommodation chamber accommodates a control substrate that controls the rotation of the drive motor 60 and corresponds to the ECU 50 in FIG. 2. The control substrate is electrically connected to a battery (power source) mounted on the vehicle 10 and an operation switch inside the vehicle compartment, etc., through connector connection parts 35a and 35b.

Here, in response to the "open operation" of the operation switch, the control substrate (ECU 50) rotationally drives the drive motor 60 counterclockwise (CCW). According to this, the output shaft 32 and the drum 33 rotate counterclockwise with high torque, and the opening side cable 22a is wound onto the drum 33 while pulling the sliding door 13. As a result, the sliding door 13 is automatically controlled in the opening direction. At this time, the closing side cable 22b is fed out from the drum 33 to the outside of the case 30.

Similarly, in response to the "close operation" of the operation switch, the control substrate (ECU 50) rotationally drives the drive motor 60 clockwise (CW). According to this, the output shaft 32 and the drum 33 rotate clockwise with high torque, and the closing side cable 22b is wound onto the drum 33 while pulling the sliding door 13. As a result, the sliding door 13 is automatically controlled in the closing direction. At this time, the opening side cable 22a is fed out from the drum 33 to the outside of the case 30. It should be noted that each of the cables 22a and 22b is covered by a flexible outer tube TU in an interval between the inlet and outlet of the drive unit 21 and the reverse pulleys 23a and 23b (see to FIG. 2), and is designed to move outer tube TU.

The case 30 includes an opening side tensioner accommodation chamber 30b and a closing side tensioner accommodation chamber 30c adjacent to the drum accommodation chamber 30a. The opening side tensioner accommodation chamber 30b and the closing side tensioner accommodation chamber 30c accommodate the opening side tensioner mechanism 40a and the closing side tensioner mechanism 40b, respectively, which apply a predetermined tension to the opening side cable 22a and the closing side cable 22b. Each of the opening side tensioner mechanism 40a and the closing side tensioner mechanism 40b includes a pulley 46 that rotates with a pulley shaft 45 serving as the reference, and a coil spring (elastic member) 44 that presses the pulley 46.

The opening side cable 22a is wound around the pulley 46 of the opening side tensioner mechanism 40a and then wound onto the drum 33. Similarly, the closing side cable 22b is wound around the pulley 46 of the closing side tensioner mechanism 40b before being wound onto the drum 33. At this time, the opening side tensioner mechanism 40a and the closing side tensioner mechanism 40b remove slack from the opening side cable 22a and the closing side cable 22b, respectively, by pressing the pulley 46 through using the coil spring 44. For example, each of the cables 22a and 22b may elongate in length through repeatedly pulling the sliding door 13 that is heavy. Each of the tensioner mechanisms 40a and 40b removes the slack associated with such elongation of the cable length.

<Schematic Configuration around the ECU>

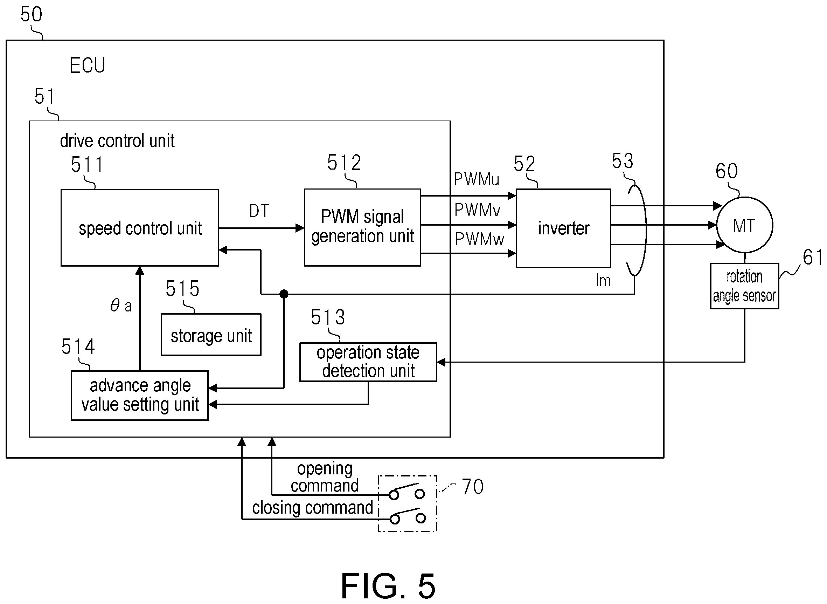

FIG. 5 is a schematic diagram showing an example configuration of the main parts around the ECU in FIG. 2. As shown in FIG. 5, the ECU 50, which is the motor control device, includes a drive control unit 51, an inverter (motor driver) 52, and a current sensor 53. Additionally, the ECU 50 is connected to an operation switch 70, which is, for example, a switch around the driver's seat of the vehicle 10 or a remote control switch.

The drive control unit 51 controls the rotation of the drive motor 60 by generating a pulse width modulation (PWM) signal to the inverter 52 in accordance with the operation command from the operation switch 70. As an example, the drive control unit 51 controls the rotation of the drive motor 60 by using the so-called sine wave drive. However, the drive control unit 51 may also control the rotation of the drive motor 60 by using the so-called rectangular wave control. The drive control unit 51 will be described in more detail later.

The operation switch 70 issues various commands in response to user operations, including an auto-open command for automatically moving the sliding door 13 to the fully open position, and an auto-close command for automatically moving the sliding door 13 to the fully closed position.

While not shown in the drawings, the inverter 52, includes, for example, six switching elements formed by metal oxide semiconductor field effect transistors (MOFETs) and flyback diodes. The six switching elements generate three-phase drive voltages Vu, Vv, and Vw by switching in response to PWM signals PWMu, PWMv, and PWMw from the drive control unit 51. The drive motor 60, which is a brushless motor MT, is driven by the three-phase drive voltages Vu, Vv, and Vw generated by the inverter 52.

The current sensor 53 is provided at an output terminal of the inverter 52, in other words, at an input terminal part of the drive motor 60, and detects an operating current (also referred to as a phase current, an actual current value, or a load current value) actually flowing through the drive motor 60.

In the following, the drive control unit 51 will be described in more detail. The drive control unit 51 is, for example, formed by a microcontroller including a central processing unit (CPU), and is mounted on a control substrate (wiring substrate) forming the ECU 50 together with the inverter 52. However, the drive control unit 51 is not limited to a microcontroller, and a portion or the entirety thereof may be formed by a field programmable gate array (FPGA) or a dedicated hardware component. The drive control unit 51 may be configured with program processing using a CPU, hardware processing using a dedicated hardware component, or a combination thereof.

The drive motor 60 controlled in the drive control unit 51 is typically a 3-phase brushless DC motor that includes a rotor formed by permanent magnets and a stator that generates a magnetic force to rotate the rotor, and includes a rotation angle sensor 61 that detects the rotational position (rotation angle) of the rotor. The rotation angle sensor 61 is typically a Hall IC that generates a 3-phase position detection signal according to the rotational position of the rotor. The rotation angle sensor 61 is not limited to a Hall IC, and may be, for example, a rotary encoder, resolver, etc.

The drive control unit 51 includes a speed control unit 511, a PWM signal generation unit 512, an operation state detection unit 513, an advance angle value setting unit 514, and a storage unit 515.

The speed control unit 511 obtains a door position based on the detection results from the operation state detection unit 513, and obtains the door target speed by referring to, for example, a speed control map that defines the relationship between the door position of the sliding door 13 and the door target speed. In other words, the speed control unit 511 obtains the target rotation speed of the drive motor 60 that drives the sliding door 13 by referring to the speed control map, etc. In the example, the speed control map is stored in the storage unit 515 in advance. Additionally, the speed control unit 511 obtains the control advance angle value $\theta a$ set by the advance angle value setting unit 514.

The speed control unit 511 calculates a target current by performing, for example, proportional-integral (PI) control based on an error between the obtained door target speed and the door moving speed (actual moving speed) detected by the operation state detection unit 513, and the control advance angle $\theta a$. More specifically, the speed control unit 511 calculates a duty ratio command value DT for the PWM signal by performing PI control, etc., based on an error between the target current and the phase currents (coil currents) Iu, Iv, Iw from the current sensor 53 and the control advance angle $\theta a$.

The PWM signal generation unit (control signal generation unit) 512 generates a motor control signal for supplying drive power to the drive motor 60. Specifically, the PWM signal generation unit 512 receives the duty ratio command value DT, etc., transmitted from the speed control unit 511 and generates PWM signals PWMu, PWMv, PWMw that reflect the duty ratio.

The operation state detection unit 513 detects the operation state of the sliding door (opening and closing body) 13 based on the cycle counts, frequencies, phase differences, etc., of the position detection signals Pu, Pv, Pw from the rotation angle sensor 61. The operation state of the sliding door 13 includes, for example, the door position, door moving speed, and door opening/closing direction of the sliding door 13. It should be noted that the operation state of the sliding door 13 also includes the state in which the sliding door 13 is stopped. In the embodiment, the operation state detection unit 513 detects the operation state of the sliding door 13 based on information such as the rotational position, rotational speed, and rotational direction of the drive motor 60, which are obtained from the measurement results of the rotation angle sensor 61. In this case, the door position is output as a count value of the number of rotations of the drive motor 60.

The method for detecting the operation state of the sliding door 13 is not particularly limited. In the case where the motor control device 50 includes a sensor capable of detecting the door position of the sliding door 13, such as a distance measuring sensor that measures the distance to the sliding door 13, the operation state detection unit 513 may detect the operation state of the sliding door 13 from the measurement results of such sensor.

The advance angle value setting unit 514 sets the control advance angle value $\theta a$ for advancing the phase of the PWM signal (motor control signal). The advance angle value setting unit 514 appropriately sets the control advance angle value $\theta a$ in accordance with the operation state, etc., of the sliding door 13 detected by the operation state detection unit 513. More specifically, the advance angle value setting unit 514 sets the control advance angle value $\theta a$ in accordance with, for example, the actual operation speed of the sliding door 13 or the load of the sliding door 13, for example, the output duty or the operating current of the drive motor 60 (in other words, the load of the drive motor 60), etc.

The speed control unit 511 controls the rotation of the drive motor 60 based on the control advance angle value $\theta a$ set by the advance angle value setting unit 514. In other words, the speed control unit 511 executes the so-called advance angle control based on the control advance angle value $\theta a$ set by the advance angle value setting unit 514. The advance angle control refers to the control that intentionally shifts the energization timing of the applied voltage (operation voltage) output by the inverter 52 to the drive motor 60 from a reference position, by using the position where the edge of the output signal from the rotation angle sensor 61 occurs as the reference position.

The following describes Setting Examples 1 to 4 as examples of the setting procedure for the control advance angle value $\theta a$ performed by the advance angle value setting unit 514.

(Setting Example 1)

In Setting Example 1, the advance angle value setting unit 514 appropriately sets the control advance angle value $\theta a$ in accordance with an actual operation speed Va of the sliding door 13 detected by the operation state detection unit 513. Specifically, the advance angle value setting unit 514 calculates the control advance angle value $\theta a$ based on Equation (1) as follows by using a basic advance angle value $\theta b$ [deg] and an additional advance angle value $\theta c$ [deg].

$$\theta a = \theta b + \theta c \qquad (1)$$

The basic advance angle value $\theta b$ is a fixed value set in advance based on the properties, etc., of the drive motor 60 and does not vary during the operation of the sliding door 13. The basic advance angle value $\theta b$ is appropriately set for each rotation direction (CW, CCW) of the drive motor 60, and the magnitude thereof is not particularly limited. As an example, in Setting Example 1, the basic advance angle value $\theta b$ in the case where the rotation direction of the drive motor 60 is clockwise (CW) is set to approximately 110 [deg], and the basic advance angle value $\theta b$ in the case where the rotation direction of the drive motor 60 is counterclockwise (CCW) is set to approximately 230 [deg]. In other words, the basic advance angle value $\theta b$ is set to different values when the sliding door 13 moves in the opening direction and when the sliding door 13 moves in the closing direction.

As an example, the additional advance angle value $\theta c$ can be set as a value that varies in accordance with the actual operation speed Va of the sliding door 13. In Setting Example 1, a speed advance angle value $\theta d$ calculated from Equation (2) in the following, which is represented by the actual operation speed Va, a speed advance angle ratio Ra (first speed advance angle ratio) Ra[deg/(mm/s)] in accordance with the speed of the sliding door 13, and a coefficient k1, is set as the additional advance angle value $\theta c$. The first speed advance angle ratio Ra is set in advance by conducting experiments, etc. The coefficient k1 is a unique value for each drive motor 60 and is determined according to various properties of each drive motor 60.

$$\theta d = Va \times (Ra \times k1) \qquad (2)$$

Therefore, in Setting Example 1, the additional advance angle value $\theta c$ (=$\theta d$) varies linearly in accordance with the actual operation speed Va of the sliding door 13 during the opening and closing operation of the sliding door 13, that is, while the actual operation speed Va of the sliding door 13 varies. As a result, the control advance angle value $\theta a$ also varies linearly in accordance with the actual operation speed Va of the sliding door 13.

That is, the speed advance angle value $\theta d$ may also be calculated from Equation (3) as follows, which is represented by a period Ta[s] (pulse period) during which the edges of the output signal (pulse) of the rotation angle sensor 61 are detected, a speed advance angle ratio Rb (second speed advance angle ratio) Rb[Deg/(s)] based on the pulse period, and a coefficient k2. The second speed advance angle ratio Rb, like the first speed advance angle ratio Ra, is set in advance by conducting experiments, etc. The coefficient k2 is a unique value for each drive motor 60 and is determined according to various properties of each drive motor 60.

$$\theta d = Ta \times (Rb \times k2) \qquad (3)$$

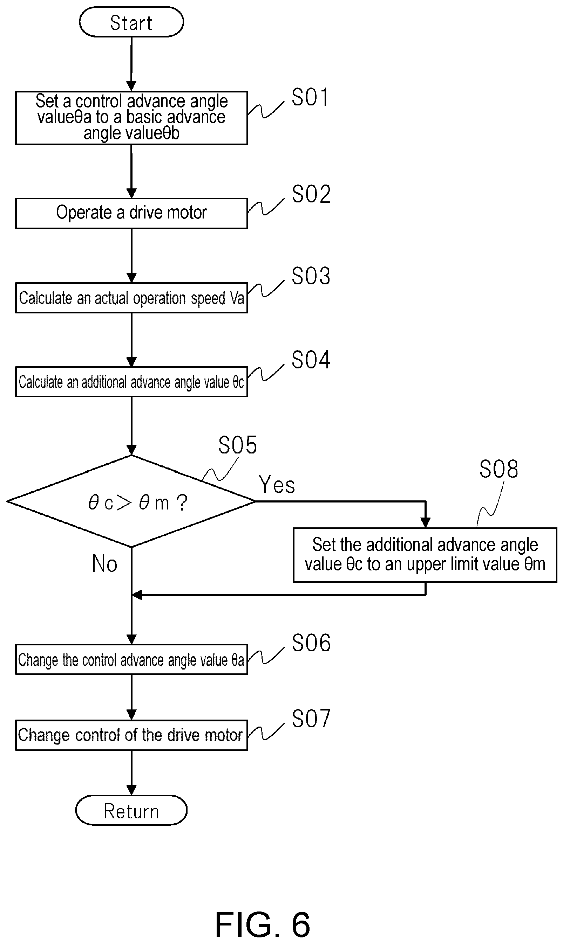

FIG. 6 is a flowchart showing an example of a procedure for setting and changing the control advance angle value of Setting Example 1. In the case where the operation switch 70 is operated and the sliding door 13 starts moving in the opening or closing direction, as shown in FIG. 6, firstly in Step S01, the advance angle value setting unit 514 sets the control advance angle value $\theta a$ to the basic advance angle value $\theta b$. In the case of Setting Example 1, in the state where the sliding door 13 is stopped, the additional advance angle value $\theta c$ calculated by Equation (2) above is 0. Therefore, the control advance angle value $\theta a$ calculated from Equation (1) becomes the basic advance angle value $\theta b$.

Then, in Step S02, the operation of the drive motor 60 is started based on the control advance angle value $\theta a$ (=$\theta b$), and in Step S03 and thereafter, the control of the drive motor 60 for operating the sliding door 13 is carried out by the speed control unit 511.

In Step S03, the actual operation speed $Va$ of the sliding door 13 is calculated. As an example, the operation state detection unit 513 calculates the actual operation speed $Va$ of the sliding door 13 based on the rotational speed of the drive motor 60 measured by the rotation angle sensor 61. Then, in Step S04, the advance angle value setting unit 514 calculates the additional advance angle value $\theta c$ based on the actual operation speed $Va$, the pulse period $Ta$, etc., of the sliding door 13. As an example, the advance angle value setting unit 514 calculates the speed advance angle value $\theta d$ based on Equation (2) above from the actual operation speed $Va$ of the sliding door 13, and sets the calculated speed advance angle value $\theta d$ as the additional advance angle value $\theta c$. The additional advance angle value $\theta c$ is calculated at a regular interval while the sliding door 13 is in operation. However, the additional advance angle $\theta c$ may be calculated as needed, and the timing of calculation may not have regular intervals.

Next, the advance angle value setting unit 514 determines whether the additional advance angle value $\theta c$ is equal to or greater than an upper limit value $\theta m$ set in advance (Step S05). In the determination, in the case where the additional advance angle value $\theta c$ is smaller than the upper limit value $\theta m$ (Step S05: No), the flow proceeds to Step S06, and the advance angle value setting unit 514 calculates the control advance angle value $\theta a$ from the additional advance angle value $\theta c$. That is, the control advance angle value $\theta a$ is set to ($\theta b+\theta c$) according to Equation (1). Then, in Step S07, the speed control unit 511 changes the rotation control of the drive motor 60 based on the control advance angle value $\theta a$ (=$\theta b+\theta c$) set by the advance angle value setting unit 514 (Step S07).

On the other hand, in the case where the additional advance angle value $\theta c$ is greater than the upper limit value $\theta m$ in Step S05 (Step S05: Yes), the flow proceeds to Step S08 and sets the additional advance angle value $\theta c$ to the upper limit value $\theta m$. Then, the flow proceeds to Step S06. Therefore, the control advance

angle value $\theta a$ in such case is set to ($\theta b+\theta m$). In Step S07, the rotation of the drive motor 60 is controlled based on the control advance angle value $\theta a$ (=$\theta b+\theta m$) that is set.

As described above, by detecting the operation state of the sliding door 13 and appropriately setting the control advance angle value $\theta a$ according to the detection result, the sliding door (opening and closing body) 13 can be smoothly opened and closed. Additionally, in Setting Example 1, the advance angle value setting unit 514 calculates the control advance angle value $\theta a$ based on Equation (1), Equation (2), or Equation (3). As a result, the control advance angle value $\theta a$ changes linearly according to the movement state of the sliding door 13. Therefore, the opening and closing movement of the sliding door (opening and closing body) 13 is more likely to be smoother.

In the example, an example in which the speed advance angle value $\theta d$ calculated based on the actual operation speed $Va$ of the sliding door 13 is set as the additional advance angle value $\theta c$ is described. However, the method of calculating the additional advance angle value $\theta c$ is not limited thereto. The additional advance angle value $\theta c$ is not necessarily the speed advance angle value $\theta d$. For example, the additional advance angle value $\theta c$ may also be a load advance angle value $\theta e$ based on the load of the sliding door 13 (which may also be considered as the load of the drive motor 60). The additional advance angle value $\theta c$ may be set as the load advance angle value (first load advance angle value) $\theta e$ calculated from Equation (4), which is represented by an output duty $Sa$ [%] of the drive power, a load advance angle ratio (first load advance angle ratio) $Rc$ [deg/(%)] in accordance with the output duty of the drive power, and a coefficient $k3$.

$$\theta e = Sa \times (Rc \times k3) \qquad (4)$$

Alternatively, the additional advance angle value $\theta c$ may be set as a load advance angle value (second load advance angle value) $\theta f$ calculated from Equation (5), which is represented by an operating current $Ia$ [A] flowing through the drive motor 60, a load advance angle ratio (second load advance angle ratio) $Rd$ [deg/(A)] in accordance with the operating current of the drive motor 60, and a coefficient $k4$. The first load advance angle ratio $Rc$ and the second load advance angle ratio $Rd$ are obtained in advance through experiments, etc. The coefficients $k3$, $k4$ are unique values for each drive motor 60 and is determined according to various properties of each drive motor 60.

$$\theta f = Ia \times (Rd \times k4) \qquad (5)$$

In addition, the additional advance angle value $\theta c$ may also be calculated by combining and performing addition, subtraction, multiplication, and division on the speed advance angle value $\theta d$, the first load advance angle value θe or the second load advance angle value θf. For example, the additional advance angle value θc may be a value obtained by adding the speed advance angle value θd and the first load advance angle value θe as shown in Equation (6) below, and may also be a value obtained by adding the speed advance angle value θd and the second load advance angle value θf as shown in Equation (7) below.

$$\theta c = \theta d + \theta e \quad (6)$$

$$\theta c = \theta d + \theta f \quad (7)$$

In addition, the additional advance angle value θc may be a value obtained by dividing the first load advance angle value θe by the speed advance angle value θd as shown in Equation (8) below, and may also be a value obtained by dividing the second load advance angle value θf by the speed advance angle value θd.

$$\theta c = \theta e / \theta d \quad (8)$$

$$\theta c = \theta f / \theta d \quad (9)$$

By calculating the additional advance angle value θc by using the speed advance angle value θd and the first load advance angle value θe or the second load advance angle value θf in this way, the control advance angle value θa is set easily and suitably. Specifically, it is easy for the actual operation speed of the sliding door 13 (the speed of the drive motor 60) to easily approach the target speed set in advance, regardless of the movement area of the sliding door 13. In other words, the control advance angle value θa is set suitably and easily, so that the actual operation speed of the sliding door 13 approaches the target speed, regardless of the movement area of the sliding door 13. As a result, it is easy to move to open and close the sliding door (opening and closing body) 13 smoothly.

In particular, by setting the additional advance angle value θc as a value obtained by dividing the first load advance angle value θe or the second load advance angle value θf by using the speed advance angle value θd, the control advance angle value θa is further set suitably and easily. For example, in the case where the electric vehicle 10 including the sliding door 13 is in an inclined state, the actual operation speed of the sliding door 13 may easily approach the target speed, regardless of the movement area of the sliding door.

The inclined state refers to a state in which the electric vehicle 10 stops on a slope, etc., and is inclined front-upward or front-downward. As described above, by setting the value obtained by dividing the first load advance angle value θe or the second load advance angle value θf by the speed advance angle value θd as the additional advance angle value θc, even if the electric vehicle 10 is in a front-upward state or a front-downward state, the actual operation speed of the sliding door may easily approach the target speed, regardless of the movement area of the sliding door 13.

Furthermore, the method of setting the advance angle control value θa is not limited to the method based on Equations (1) to (9). For example, it may also be that a table or a map defining the relationship between the actual operation speed Va and the additional advance angle value θc of the sliding door 13 is stored in the storage unit 515, and the advance angle value setting unit 514 refers to the table, etc., obtains the additional advance angle value θc and calculates the control advance angle value θa from Equation (1).

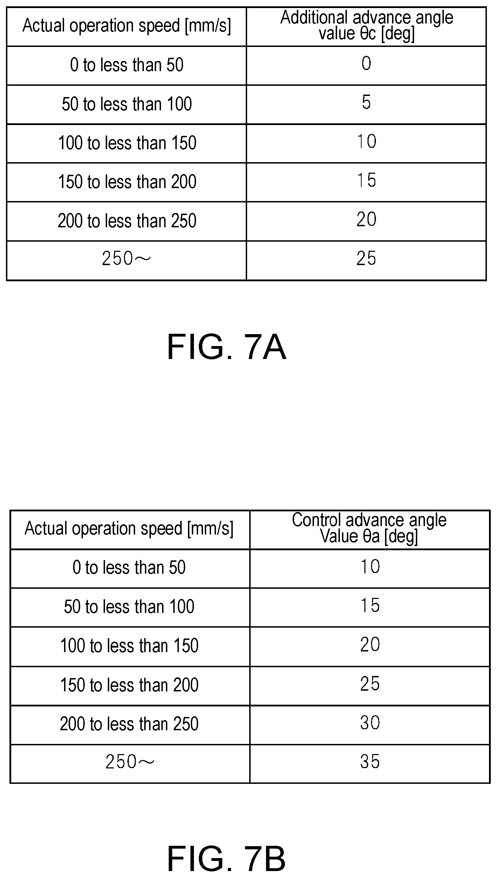

FIG. 7A is a diagram showing an example of a table defining the relationship between the actual operation speed Va of the sliding door and the additional advance angle value θc when the drive motor rotates clockwise (CW). In the example shown in FIG. 7A, the additional advance angle value θc is defined to increase stepwise as the actual operation speed Va of the sliding door 13 increases.

Specifically, in the range where the actual operation speed Va of the sliding door 13 is within 0 to 50 [mm/s], the additional advance angle value θc is set to 0 [deg]. Therefore, in the range where the actual operation speed Va is 0 to 50 [mm/s], the control advance angle value θa becomes the basic advance angle value θb. Additionally, in the range where the actual operation speed Va is within 50 to 100 [mm/s], the additional advance angle value θc is set to 5 [deg]. Consequently, in the range where the actual operation speed Va is 50 to 100 [mm/s], the control advance angle value θa becomes (θb+5).

In other words, in the example, the additional advance angle value θc is set to increase by 5 [deg] every time when the actual operation speed Va of the sliding door 13 increases by 50 [mm/s]. As a result, the control advance angle value θa increases by 5 [deg] every time when the actual operation speed Va of the sliding door 13 increases by 50 [mm/s].

For example, a table or a map defining the relationship between the actual operation speed Va of the sliding door 13 and the control advance angle value θa may be stored in the storage unit 515, and the advance angle value setting unit 514 may set the control advance angle value θa by referring to the table, etc.

FIG. 7B is a diagram showing an example of a table defining the relationship between the actual operation speed Va of the sliding door and the control advance angle value θa when the drive motor rotates clockwise (CW). In the example shown in FIG. 7B, the control advance angle value θa is defined to increase stepwise as the actual operation speed Va of the sliding door 13 increases.

In the example, the control advance angle value θa is set to 10 [deg] in the range where the actual operation speed Va of the sliding door 13 is within 0 to 50 [mm/s]. Additionally, in the range where the actual operation speed Va is within 50 to 100 [mm/s], the control advance angle value θa is set to 15 [deg]. In other words, in the example, the control advance angle value θa is set to increase by 5 [deg] every time when the actual operation speed Va of the sliding door 13 increases by 50 [mm/s]. In addition, the advance angle value setting unit 514 sets the control advance angle value θa according to the actual operation speed Va of the sliding door 13 by referring to the table, etc., in FIG. 7B, without performing calculation based on the Equations (1) to (9).

In this way, with the advance angle value setting unit 514 setting the control advance angle value θa according to the actual operation speed Va of the sliding door 13 based on the table, etc., stored in the storage unit 515, the opening and closing operation of the sliding door (opening and closing body) 13 can be made smoother.

(Setting Example 2)

Setting Example 2 is an example where the advance angle value setting unit 514 is configured to appropriately correct the additional advance angle value θc. The advance angle value setting unit 514 in Setting Example 2 calculates the control advance angle value θa based on Equation (1), similar to Setting Example 1. However, at this time, the advance angle value setting unit 514 corrects the additional advance angle value θc according to the actual operation speed Va and the output duty (load) Sa. It should be noted that the output duty Sa can also be interpreted as the duty ratio of the voltage applied to the drive motor 60.

Specifically, in Setting Example 2, for example, a map, etc., defining the relationship between the actual operation speed Va [mm/s] as well as the output duty Sa [%] and a correction amount θk is stored in advance for the case where the actual operation speed Va of the sliding door 13 is V1 (in this example, 50 [mm/s]) or higher.

The advance angle value setting unit 514 obtains the correction amount θk corresponding to the actual operation speed Va and output duty Sa by referring to the map, etc., stored in the storage unit 515, and calculates the additional advance angle value θc based on the correction amount θk.

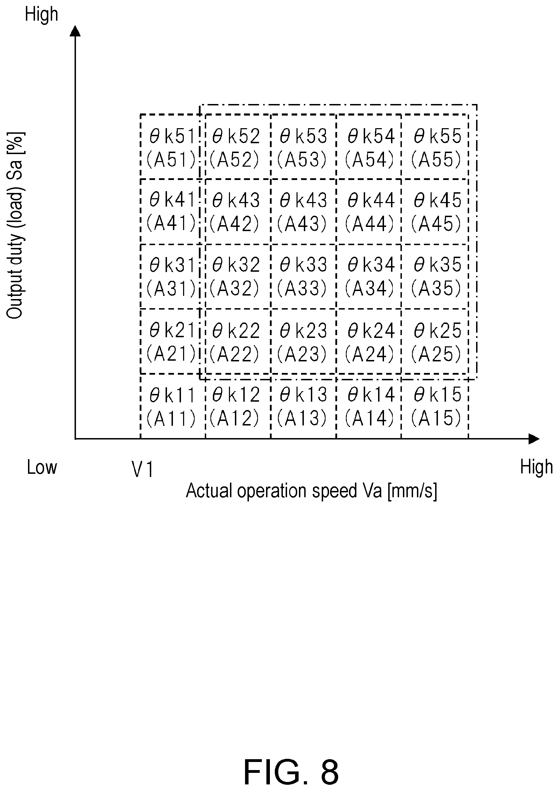

FIG. 8 is a diagram showing an example of the map defining the relationship between the actual operation speed Va [mm/s] as well as the output duty Sa [%], and the correction amount θk. In the example, correction amounts θk11 to θk55 are set for respective regions A11 to A55 specified by the actual operation speed Va and output duty Sa. The correction amount θk (θk11 to θk55) in each of the regions A11 to A55 is not particularly limited and can be set as appropriate. For example, the correction amount θk for each of the regions A11 to A55 may be calculated from the correction amounts of adjacent regions. More specifically, the correction amount θk for each of the regions A11 to A55 may be calculated by performing addition, subtraction, multiplication, or division on the correction amounts for adjacent areas, that is, by performing calculation combining addition, subtraction, multiplication, and division.

In the example, for the correction amounts θk in the regions A22 to A55 enclosed by the alternate long and short dash line in FIG. 8, the values are obtained by adding the correction amounts of the regions on the lower side and the left side in the figure. For example, the correction amount θk22 for the region A22 is the value (θk12+θk22) obtained by adding the correction amount θk12 of the region A12 and the correction amount θk21 of the region A21. Additionally, the correction amounts θk22 to θk55 for the respective regions A22 to A55 may also be, for example, values obtained by multiplying the correction amounts of the regions on the lower side and the left side in the figure.

As described above, in Setting Example 2, a map, etc., defining the relationship between the actual operation speed Va as well as the output duty Sa [%] and the correction amount θk is stored in the storage unit 515, and the advance angle value setting unit 514 calculates the control advance angle value θa based on Equation (1) by referring to the map, etc. With Setting Example 2, it is also possible to smoothly open and close the sliding door (opening and closing body) 13.

(Setting Example 3)

Setting Example 3 is an example where the advance angle value setting unit 514 sets the control advance angle value θa according to the door position of the sliding door 13.

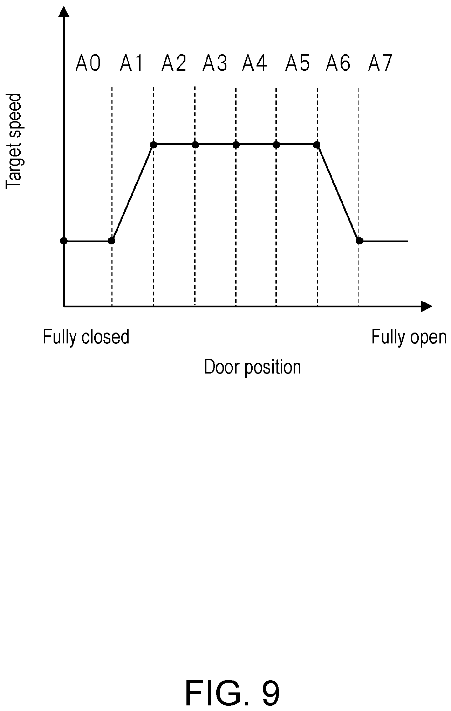

FIG. 9 is a diagram showing an example of a relationship between the door position of the sliding door and a target speed. In the example shown in FIG. 9, the moving area of the sliding door 13, that is, the moving area from the fully closed position to the fully open position of the sliding door 13, is divided into eight control areas A0 to A7. As an example, each of the control areas A0 to A7 is a region with a different slope of the target speed, and within each of the control areas A0 to A7, the slope of the target speed is approximately constant. In other words, the boundaries of each of the control areas A0 to A7 are set at the points of change where the slope of the target speed changes. Then, the advance angle value setting unit 514 of Setting Example 3 sets the control advance angle value θa depending on which of the control areas A0 to A7 the door position of the sliding door 13 is in.

In the example, the door position of the sliding door 13 is determined based on the detection result of the operation state detection unit 513, that is, the measurement result of the rotation angle sensor 61. Additionally, the control advance angle θa in each of the control areas (operating areas) A0 to A7 is determined in advance. As an example, a table or a map defining the relationship between the control areas (operation areas) A0 to A7 of the sliding door 13 and the control advance angle value θa is stored in the storage unit 515. The advance angle value setting unit 514 appropriately sets the control advance angle value θa according to the control areas A0 to A7 by referring to the table, etc., stored in the storage unit 515. The control advance angle value θa for each of the control areas A0 to A7 may be changed depending on whether the sliding door 13 moves in the opening direction or moves in the closing direction.

In this way, by setting the control advance angle value θa according to the control areas A0 to A7 of the sliding door 13, it becomes easy to smoothly open and close the sliding door (opening and closing body) 13.

In this example, a case where the moving area of the sliding door 13 is divided into eight control areas has been described. However, the number of control areas is not particularly limited, and may be seven or less, or nine or more.

In addition, in the example, the control advance angle value θa is varied according to the control areas A0 to A7. However, for example, the control advance angle value θa may also be varied in accordance with the position of the sliding door 13. For example, as shown in FIG. 2, the inlet part 14a (R part) that is curved may also be provided in the guide rail 14 that guides the sliding door 13. In such case, while the sliding door 13 moves through the area corresponding to the inlet part 14a, the control advance angle value θa may be increased (varied) more than that while the movement through other areas. Accordingly, it is easy to move to open and close the sliding door (opening and closing body) 13 more smoothly.

(Setting Example 4)

Setting Example 4 is an example where the setting control of the control advance angle value θa is changed in a predetermined period (startup period) after the operation of the sliding door 13 starts (after the startup of the drive motor 60) and the normal operation period excluding the startup time. The advance angle value setting unit 514 exerts control (hereinafter also referred to as normal setting control) to set the control advance angle value θa according to the above procedure during the normal operation period of the sliding door 13. On the other hand, during the startup period, the advance angle value setting unit 514 exerts control (hereinafter also referred to as startup setting control) different from the normal setting control. The startup period refers to a predetermined period until the drive of the drive motor 60 becomes stable after the operation of the sliding door 13 starts As an example, the startup period refers to the period until a transition condition 2 is satisfied.

In the startup setting control, the control advance angle value may be set as a fixed value, or the control advance angle value may be appropriately changed according to the driving state of the drive motor 60, etc. In the example, during the startup setting control, similar to the case of normal setting control, the control advance angle value θa is calculated from the basic advance angle value θb and the additional advance angle value θc. However, the additional advance angle value θc is set to gradually increase according to the elapsed time from the start of the operation of the sliding door 13, regardless of the operation state of the sliding door 13.

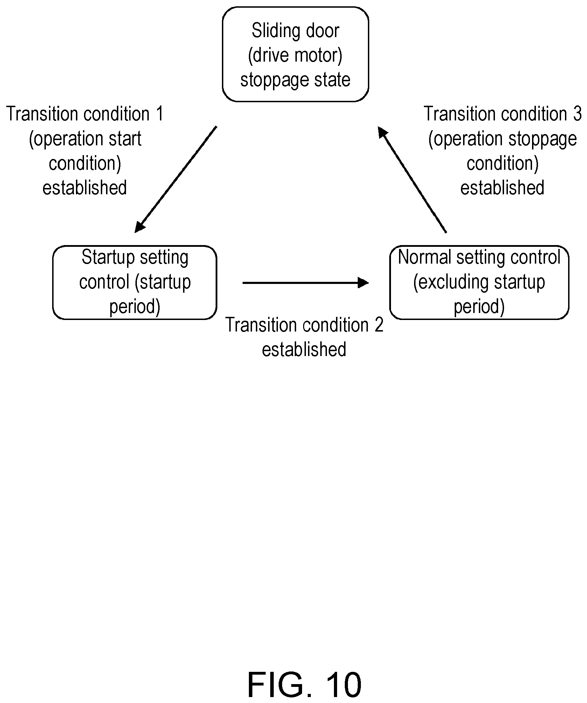

FIG. 10 is a diagram explaining the transition between the startup setting control and the normal setting control. As shown in FIG. 10, when a transition condition 1 (operation start condition) is satisfied during the operation stop time during which the drive motor 60 is stopped, it becomes the startup period of the sliding door 13, and the setting control of the control advance angle value θa transitions to the startup setting control. In other words, when the transition condition 1 is established, the drive motor 60 operates, and the startup setting control is executed by the advance angle value setting unit 514. The transition condition 1 may be determined as appropriate, but, as an example, the transition condition 1 may include the operation on the operation switch 70 performed by the user.

Then, when the transition condition 2 is established during the execution of the startup setting control, the setting control of the control advance angle value θa carried out by the advance angle value setting unit 514 transitions from the startup setting control to the normal setting control. The transition condition 2 may also be determined as appropriate, but examples include the elapsed time from the start of the operation of the sliding door 13, the operation speed of the sliding door 13, the door position of the sliding door 13, and the target speed of the sliding door 13.

Furthermore, when a transition condition 3 (operation stop condition) is established during the execution of the normal setting control, the sliding door 13 is stopped. In other words, the setting control of the control advance angle value θa carried out by the advance angle value setting unit 514 is terminated. The transition condition 3 can also be determined as appropriate, but examples may include the sliding door 13 reaching the fully open position or the fully closed position.

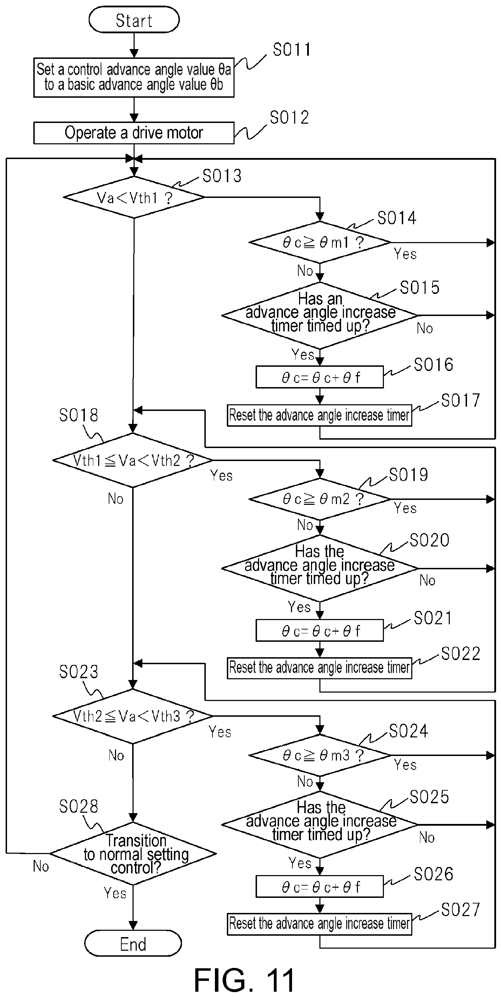

Next, referring to FIG. 11, an example of the setting procedure for the control advance angle value θa by the startup setting control will be described. FIG. 11 is a flowchart describing an example of the startup setting control exerted by the advance angle value setting unit.

As shown in FIG. 11, in the case where the operation switch 70 is operated and the sliding door 13 starts moving in the opening direction or the closing direction, firstly, in Step S011 as shown in FIG. 11, the control advance angle value θa is set to the basic advance angle value θb. Then, in Step S012, the operation of the drive motor 60 is started based on the control advance angle value θa (=θb). It should be noted that Steps S011 and S012 are similar to Steps S01 and S02 of Setting Example 1.

When the drive motor 60 is started in Step S012 and the operation of the sliding door 13 starts, that is, when the transition condition 1 (operation start condition) is established as described above, the setting control of the control advance angle value θa transitions to the startup setting control (see FIG. 10). Although not shown, the motor control device 50 includes a timer (advance angle increase timer) as a time measurement means. When the startup setting control starts, the advance angle increase timer is reset, and the time measurement performed by the advance angle increase timer starts.

Next, in Step S013, it is determined whether the actual operation speed Va of the sliding door 13 is less than a first speed Vth1 set in advance. The first speed Vth1 may be set as appropriate, but for example, it is set to about 20 [mm/s]. In the case where it is determined that the actual operation speed Va of the sliding door is less than the first speed Vth1 (Step S013: Yes), the flow proceeds to Step S014, and whether the additional advance angle value θc has reached the first upper limit value θm1, that is, whether the additional advance angle value θc is equal to or greater than the first upper limit value θm1 is determined. The first upper limit value θm1 may be set as appropriate, but as an example, the first upper limit value θm1 is set to a value of about 10 [deg]. At the start of the drive motor 60, since the additional advance angle value θc is set to 0, it is determined that the additional advance angle value θc is less than the first upper limit value θm1.

In the case where it is determined that the additional advance angle value θc is less than the first upper limit value θm1 (Step S014: No), the flow proceeds to Step S015, and whether an advance angle increase timer has timed up is determined. In other words, whether the measurement time by the advance angle increase timer has reached the set time is determined. The set time can be set to any value, but as an example, the set time is set to a value of about 10 [ms].

In the case where it is determined in Step S015 that the advance angle increase timer has not timed up (Step S015: No), the flow returns to Step S013. On the other hand, if it is determined in Step S015 that the advance angle increase timer has timed up (Step S015: Yes), the flow proceeds to Step S016, and a predetermined increase advance angle value θf [deg] is added to the previous value of the additional advance angle value θc. The increase advance angle value θf is set, for example, to a value of about 2 [deg]. Then, in Step S017, the advance angle increase timer is reset, and the process returns to Step S013. Also, if the increase of the additional advance angle value θc in Step S16 is repeated multiple times, and it is determined that the additional advance angle value θc has reached the first upper limit value θm1 (Step S014: Yes), the flow returns to Step S013 without proceeding to Step S015.

Then, when the actual operation speed Va of the sliding door 13 becomes equal to or greater than the first speed Vth1 in Step S013 (Step S013: No), the process proceeds to Step S018. In Step S018, it is determined whether the actual operation speed Va of the sliding door 13 is equal to or greater than the first speed Vth1 and less than a second speed Vth2. It suffices as long as the second speed Vth2 is greater than the first speed Vth1, and the second speed Vth2 may be set as appropriate. However, as an example, the second speed Vth2 is set to about 40 [mm/s].

Here, in the case where it is determined that the actual operation speed Va of the sliding door 13 is equal to or greater than the first speed Vth1 and less than the second speed Vth2 (Step S018: Yes), the flow proceeds to Step S019, and whether the additional advance angle value θc has reached the second upper limit value θm2, that is, whether the additional advance angle value θc is equal to or greater than the second upper limit value θm2 is determined. It suffices as long as the second upper limit value θm2 is set to a value greater than the first upper limit value θm1. As an example, the second upper limit value θm2 is set to a value of about 20 [deg]. In the case where it is determined that the additional advance angle value θc is less than the second upper limit value θm2 (Step S019: No), the flow proceeds to Step S020, and whether the advance angle increase timer has timed up is determined. In other words, whether the measurement time by the advance angle increase timer has reached the set time is determined.

In the case where it is determined in Step S020 that the advance angle increase timer has not timed up (Step S020: No), the flow returns to Step S018. On the other hand, if it is determined in Step S020 that the advance angle increase timer has timed up (Step S020: Yes), the flow proceeds to Step S021, and a predetermined increase advance angle value θf [deg] is added to the previous value of the additional advance angle value θc. Then, in Step S022, the advance angle increase timer is reset, and the process returns to Step S018. Also, if the increase of the additional advance angle value θc in Step S21 is repeated multiple times, and it is determined that the additional advance angle value θc has reached the second upper limit value θm2 (Step S019: Yes), the flow returns to Step S018 without proceeding to Step S020.

Furthermore, when the actual operation speed Va of the sliding door 13 becomes equal to or greater than the second speed Vth2 in Step S018, that is, in the case where it is determined that the actual operation speed Va of the sliding door 13 is not equal to or greater than the first speed Vth1 and less than the second speed Vth2 (Step S018: No), the process proceeds to Step S023. In Step S023, it is determined whether the actual operation speed Va of the sliding door 13 is equal to or greater than the second speed Vth2 and less than a third speed Vth3. It suffices as long as the third speed Vth3 is greater than the second speed Vth2, and the third speed Vth3 may be set as appropriate. However, as an example, the third speed Vth3 is set to about 60 [mm/s].

Here, in the case where it is determined that the actual operation speed Va of the sliding door 13 is equal to or greater than the second speed Vth2 and less than the third speed Vth3 (Step S023: Yes), the flow proceeds to Step S024, and whether the additional advance angle value θc has reached the third upper limit value θm3, that is, whether the additional advance angle value θc is equal to or greater than the third upper limit value θm3 is determined. It suffices as long as the third upper limit value θm3 is set to a value greater than the second upper limit value θm2. As an example, the third upper limit value θm3 is set to a value of about 30 [deg]. In the case where it is determined that the additional advance angle value θc is less than the third upper limit value θm3 (Step S024: No), the flow proceeds to Step S025, and whether the advance angle increase timer has timed up is determined. In other words, whether the measurement time by the advance angle increase timer has reached the set time is determined.

In the case where it is determined in Step S025 that the advance angle increase timer has not timed up (Step S025: No), the flow returns to Step S023. On the other hand, if it is determined in Step S025 that the advance angle increase timer has timed up (Step S025: Yes), the flow proceeds to Step S026, and a predetermined increase advance angle value θf [deg] is added to the previous value of the additional advance angle value θc. Then, in Step S027, the advance angle increase timer is reset, and the process returns to Step S023. Also, if the increase of the additional advance angle value θc in Step S26 is repeated multiple times, and it is determined that the additional advance angle value θc has reached the third upper limit value θm3 (Step S024: Yes), the flow returns to Step S023 without proceeding to Step S025.

Subsequently, when the actual operation speed Va of the sliding door 13 becomes equal to or greater than the third speed Vth3 in Step S023 (Step S023: No), that is, when it is determined that the actual operation speed Va is not equal to or greater than the second speed Vth2 and less than the third speed Vth3 (Step S023: No), the process proceeds to Step S028. In Step S028, whether to transition the setting control of the control advance angle value θa from the startup setting control to the normal setting control is determined. As an example, it is determined whether the transition condition 2 is established. In the case where it is determined that the transition condition 2 is established (Step S028: Yes), the startup setting control is terminated, and the setting control transitions to the normal setting control. On the other hand, in the case where the transition condition 2 is determined as not established (Step S028: No), the process returns to Step S013, and the startup setting control continues.

By executing the startup setting control, which is different from the normal setting control, during the startup period of the sliding door 13, it is possible to operate the sliding door 13 more appropriately even during the startup period of the sliding door 13. As a result, the sliding door 13 can be operated more smoothly in all areas from the fully closed position to the fully open position of the sliding door 13.

For example, in the above embodiments, the sliding door is described as an example of the opening and closing body. However, the opening and closing body may be, for instance, a tailgate or a sunroof. The motor control device of the disclosure can be applied to the control of drive motors that drive various opening and closing bodies.

[Reference Signs List]

10: Electric vehicle; 11: Vehicle body; 20: Power sliding door device (vehicle opening and closing body control device); 21: Drive unit; 30: Case; 50: Motor control unit (ECU); 51: Drive control unit; 52: Inverter (motor driver) 53: Current sensor; 60: Drive motor; 61: Rotation angle sensor; 70: Operation switch; 511: Speed control unit; 512: PWM signal generation unit (control signal generation unit); 513: Operation state detection unit; 514: Advance angle value setting unit; 515: Storage unit.

**Claims**

1. A motor control device (50), controlling a drive motor (60) connected with an opening and closing body (13) of a vehicle and provided for automatically opening and closing the opening and closing body (13), the motor control device (50) comprising:

   a control signal generation unit (512), generating a motor control signal for supplying drive power to the drive motor (60);
   an advance angle value setting unit (514), setting a control advance angle value for advancing a phase of the motor control signal; and
   an operation state detection unit (513), detecting an operation state of the opening and closing body (13),
   wherein the advance angle value setting unit (514) sets the control advance angle value (θa) in accordance with the operation state of the opening and closing body (13) detected by the operation state detection unit (513),
   the motor control device (50) being **characterized in that**

   the control advance angle value (θa) is calculated by adding an additional advance angle value (0c) to a basic advance angle value (θb) that is a fixed value set in advance, and the advance angle value setting unit (514) sets the additional advance angle value (θc) in accordance with the operation state of the opening and closing body (13) detected by the operation state detection unit (513).

2. The motor control device (50) as claimed in claim 1, wherein the operation state detection unit (513) detects an actual operation speed (Va) of the opening and closing body (13), and
the advance angle value setting unit (514) sets the control advance angle value ($\theta$a) in accordance with the actual operation speed (Va) of the opening and closing body (13) that is detected by the operation state detection unit (513).

3. The motor control device (50) as claimed in claim 2, wherein:

the operation state detection unit (513) detects a load of the opening and closing body (13), and
the advance angle value setting unit (514) sets the control advance angle value (0a) in accordance with the load of the opening and closing body (13) detected by the operation state detection unit (513).

4. The motor control device (50) as claimed in claim 1, wherein:
the advance angle value setting unit (514) calculates the additional advance angle value (0c) by using a speed advance angle value ($\theta$d) based on an actual operation speed (Va) of the opening and closing body (13).

5. The motor control device (50) as claimed in claim 4, wherein:
the advance angle value setting unit (514) calculates the speed advance angle value ($\theta$d) by multiplying the actual operation speed (Va) of the opening and closing body (13) by a speed advance angle ratio set in advance in accordance with the actual operation speed (Va) of the opening and closing body (13).

6. The motor control device (50) as claimed in claim 4, comprising: a rotation angle sensor (61), detecting a rotation angle of the drive motor (60),
wherein the advance angle value setting unit (514) calculates the speed advance angle value (0d) obtained by multiplying a period of an output signal of the rotation angle sensor (61) by a first speed advance angle ratio (Ra) set in advance in accordance with a period of the output signal of the rotation angle sensor (61).

7. The motor control device (50) as claimed in claim 1, wherein:
the advance angle value setting unit (514) calculates the additional advance angle value ($\theta$c ) by using a first load advance angle value ($\theta$e) obtained by multiplying an output duty (Sa) of the drive power by a first load advance angle ratio (Rc) set in advance in accordance with the output duty (Sa) of the drive power.

8. The motor control device (50) as claimed in claim 1, wherein:
the advance angle value setting unit (514) calculates the additional advance angle value ($\theta$c) by using a second load advance angle value ($\theta$f) obtained by multiplying an operating current of the drive motor by a second load advance angle ratio set in advance in accordance with the operating current of the drive motor (60).

9. The motor control device (50) as claimed in claim 7, wherein:
the advance angle value setting unit (514) calculates the additional advance angle value ($\theta$c) by adding the first load advance angle value ($\theta$e) to a speed advance angle value ($\theta$d) based on an actual operation speed (Va) of the opening and closing body (13).

10. The motor control device (50) as claimed in claim 8, wherein:
the advance angle value setting unit (514) calculates the additional advance angle value ($\theta$c) by adding the second load advance angle value ($\theta$f) to a speed advance angle value ($\theta$d) based on an actual operation speed (Va) of the opening and closing body (13).

11. The motor control device (50) as claimed in claim 7, wherein:
the advance angle value setting unit (514) calculates the additional advance angle value ($\theta$c) by dividing the first load advance angle value ($\theta$e) by using a speed advance angle value ($\theta$d) based on an actual operation speed (Va) of the opening and closing body (13).

12. The motor control device (50) as claimed in claim 8, wherein:
the advance angle value setting unit (514) calculates the additional advance angle value ($\theta$c) by dividing the second load advance angle value ($\theta$f) by using a speed advance angle value ($\theta$d) based on an actual operation speed (Va) of the opening and closing body (13).

13. The motor control device (50) as claimed in claim 1, wherein:

the operation state detection unit (513) detects in which of a plurality of control areas (AO to A7) set in an operation area of the opening and closing body (13) the opening and closing body (13) is located, and
the advance angle value setting unit (514) sets the control advance angle value ($\theta$a) in accordance with the control area where the opening and closing body (13) is located.

14. The motor control device (50) as claimed in claim 1, wherein the advance angle value setting unit (514) exerts, during a startup period of the drive motor (60), startup setting control differing from normal setting control that sets the control advance angle value (θa) in accordance with the operation state of the opening and closing body (13).

15. The motor control device (50) as claimed in claim 14, wherein the advance angle value setting unit (514) gradually increases the control advance angle value (θa) during the startup period of the drive motor (60) through the startup setting control.


**Patentansprüche**

1. Motorsteuerungsvorrichtung (50), die einen Antriebsmotor (60) steuert, der mit einem Öffnungs- und Schließkörper (13) eines Fahrzeugs verbunden und zum automatischen Öffnen und Schließen des Öffnungs- und Schließkörpers (13) bereitgestellt ist, wobei die Motorsteuerungsvorrichtung (50) umfasst:

   eine Steuersignalerzeugungseinheit (512), die ein Motorsteuersignal zum Zuführen von Antriebsleistung an den Antriebsmotor (60) erzeugt;
   eine Vorschubwinkelwerteinstelleinheit (514), die einen Steuervorschubwinkelwert zum Vorschieben einer Phase des Motorsteuersignals einstellt; und
   eine Betriebszustandserfassungseinheit (513), die einen Betriebszustand des Öffnungs- und Schließkörpers (13) erfasst,
   wobei die Vorschubwinkelwerteinstelleinheit (514) den Steuervorschubwinkelwert (θa) in Übereinstimmung mit dem Betriebszustand des Öffnungs- und Schließkörpers (13) einstellt, der von der Betriebszustandserfassungseinheit (513) erfasst wird,
   wobei die Motorsteuerungsvorrichtung (50) **dadurch gekennzeichnet ist, dass**:
   der Steuervorschubwinkelwert (θa) berechnet wird, indem ein zusätzlicher Vorschubwinkelwert (θc) zu einem Basisvorschubwinkelwert (θb) addiert wird, der ein im Voraus eingestellter fester Wert ist, und die Vorschubwinkelwerteinstelleinheit (514) den zusätzlichen Vorschubwinkelwert (θc) in Übereinstimmung mit dem Betriebszustand des Öffnungs- und Schließkörpers (13) einstellt, der von der Betriebszustandserfassungseinheit (513) erfasst wird.

2. Motorsteuerungsvorrichtung (50) nach Anspruch 1, wobei die Betriebszustandserfassungseinheit (513) eine tatsächliche Betriebsgeschwindigkeit (Va) des Öffnungs- und Schließkörpers (13) erfasst, und die Vorschubwinkelwerteinstelleinheit (514) den Steuervorschubwinkelwert (θa) in Übereinstimmung mit der tatsächlichen Betriebsgeschwindigkeit (Va) des Öffnungs- und Schließkörpers (13) einstellt, die von der Betriebszustandserfassungseinheit (513) erfasst wird.

3. Motorsteuerungsvorrichtung (50) nach Anspruch 2, wobei:

   die Betriebszustandserfassungseinheit (513) eine Last des Öffnungs- und Schließkörpers (13) erfasst, und
   die Vorschubwinkelwerteinstelleinheit (514) den Steuervorschubwinkelwert (θa) in Übereinstimmung mit der von der Betriebszustandserfassungseinheit (513) erfassten Last des Öffnungs- und Schließkörpers (13) einstellt.

4. Motorsteuerungsvorrichtung (50) nach Anspruch 1, wobei:
   die Vorschubwinkelwerteinstelleinheit (514) den zusätzlichen Vorschubwinkelwert (θc) unter Verwendung eines Geschwindigkeitsvorschubwinkelwertes (θd) basierend auf einer tatsächlichen Betriebsgeschwindigkeit (Va) des Öffnungs- und Schließkörpers (13) berechnet.

5. Motorsteuerungsvorrichtung (50) nach Anspruch 4, wobei:
   die Vorschubwinkelwerteinstelleinheit (514) den Geschwindigkeitsvorschubwinkelwert (θd) berechnet, indem sie die tatsächliche Betriebsgeschwindigkeit (Va) des Öffnungs- und Schließkörpers (13) mit einem Geschwindigkeitsvorschubwinkelverhältnis multipliziert, das im Voraus in Übereinstimmung mit der tatsächlichen Betriebsgeschwindigkeit (Va) des Öffnungs- und Schließkörpers (13) eingestellt wird.

6. Motorsteuerungsvorrichtung (50) nach Anspruch 4, umfassend: einen Drehwinkelsensor (61), der einen Drehwinkel des Antriebsmotors (60) erfasst, wobei die Vorschubwinkelwerteinstelleinheit (514) den Geschwindigkeitsvorschubwinkelwert (θd) berechnet, der durch Multiplizieren einer Periode eines Ausgangssignals des Drehwinkelsensors (61) mit einem ersten Geschwindigkeitsvorschubwinkelverhältnis (Ra) erhalten wird, das im Voraus in Übereinstimmung mit einer Periode des Ausgangssignals des Drehwinkelsensors (61) eingestellt wird.

7. Motorsteuerungsvorrichtung (50) nach Anspruch 1, wobei:
   die Vorschubwinkelwerteinstelleinheit (514) den zusätzlichen Vorschubwinkelwert (θc) unter Verwendung eines ersten Lastvorschubwinkelwertes (θe) berechnet, der durch Multiplizieren eines Ausgangstastverhältnisses (Sa) der Antriebsleistung mit einem ersten Lastvorschubwinkelverhältnis (Rc) erhalten wird, das in Übereinstimmung mit dem Ausgangstastverhältnis (Sa) der Antriebsleistung im Voraus eingestellt wird.

8. Motorsteuerungsvorrichtung (50) nach Anspruch 1, wobei:
die Vorschubwinkelwerteinstelleinheit (514) den zusätzlichen Vorschubwinkelwert (θc) unter Verwendung eines zweiten Lastvorschubwinkelwerts (θf) berechnet, der durch Multiplizieren eines Betriebsstroms des Antriebsmotors mit einem zweiten Lastvorschubwinkelverhältnis erhalten wird, das entsprechend dem Betriebsstrom des Antriebsmotors (60) im Voraus eingestellt wird.

9. Motorsteuerungsvorrichtung (50) nach Anspruch 7, wobei:
die Vorschubwinkelwerteinstelleinheit (514) den zusätzlichen Vorschubwinkelwert (θc) berechnet, indem sie den ersten Lastvorschubwinkelwert (θe) zu einem Geschwindigkeitsvorschubwinkelwert (θd) addiert, basierend auf einer tatsächlichen Betriebsgeschwindigkeit (Va) des Öffnungs- und Schließkörpers (13).

10. Motorsteuerungsvorrichtung (50) nach Anspruch 8, wobei:
die Vorschubwinkelwerteinstelleinheit (514) den zusätzlichen Vorschubwinkelwert (θc) durch Addieren des zweiten Lastvorschubwinkelwertes (θf) zu einem Geschwindigkeitsvorschubwinkelwert (θd) berechnet, basierend der einer tatsächlichen Betriebsgeschwindigkeit (Va) des Öffnungs- und Schließkörpers (13).

11. Motorsteuerungsvorrichtung (50) nach Anspruch 7, wobei:
die Vorschubwinkelwerteinstelleinheit (514) den zusätzlichen Vorschubwinkelwert (θc) berechnet, indem sie den ersten Lastvorschubwinkelwert (θe) unter Verwendung eines Geschwindigkeitsvorschubwinkelwerts (θd) dividiert, basierend auf einer tatsächlichen Betriebsgeschwindigkeit (Va) des Öffnungs- und Schließkörpers (13).

12. Motorsteuerungsvorrichtung (50) nach Anspruch 8, wobei:
die Vorschubwinkelwerteinstelleinheit (514) den zusätzlichen Vorschubwinkelwert (θc) berechnet, indem sie den zweiten Lastvorschubwinkelwert (θf) unter Verwendung eines Geschwindigkeitsvorschubwinkelwertes (θd) dividiert, basierend auf einer tatsächlichen Betriebsgeschwindigkeit (Va) des Öffnungs- und Schließkörpers (13).

13. Motorsteuerungsvorrichtung (50) nach Anspruch 1, wobei:

die Betriebszustandserfassungseinheit (513) erfasst, in welchem von einer Vielzahl von Steuerbereichen (AO bis A7), die in einem Betriebsbereich des Öffnungs- und Schließkörpers (13) eingestellt sind, sich der Öffnungs- und Schließkörper (13) befindet, und
die Vorschubwinkelwerteinstelleinheit (514) den Steuervorschubwinkelwert (θa) in Übereinstimmung mit dem Steuerbereich einstellt, in dem sich der Öffnungs- und Schließkörper (13) befindet.

14. Motorsteuerungsvorrichtung (50) nach Anspruch 1, wobei die Vorschubwinkelwerteinstelleinheit (514) während einer Startperiode des Antriebsmotors (60) eine Starteinstellungssteuerung ausübt, die sich von der normalen Einstellungssteuerung unterscheidet, die den Steuervorschubwinkelwert (θa) in Übereinstimmung mit dem Betriebszustand des Öffnungs- und Schließkörpers (13) einstellt.

15. Motorsteuerungsvorrichtung (50) nach Anspruch 14, wobei die Vorschubwinkelwerteinstelleinheit (514) den Steuervorschubwinkelwert (θa) während der Startperiode des Antriebsmotors (60) durch die Starteinstellungssteuerung allmählich erhöht.

**Revendications**

1. Un dispositif (50) de commande de moteur, destiné à commander un moteur d'entraînement (60) relié à un élément (13) d'ouverture et de fermeture d'un véhicule et prévu pour ouvrir et fermer automatiquement ledit élément (13) d'ouverture et de fermeture, le dispositif (50) de commande de moteur comprenant :

une unité (512) de génération de signal de commande, générant un signal de commande de moteur destiné à fournir une puissance d'entraînement au moteur d'entraînement (60) ;
une unité (514) de réglage de la valeur d'angle d'avance, réglant une valeur d'angle d'avance de commande pour faire avancer une phase du signal de commande de moteur ; et
une unité (513) de détection d'état de fonctionnement, détectant un état de fonctionnement de l'élément (13) d'ouverture et de fermeture,
dans lequel
l'unité (514) de réglage de la valeur d'angle d'avance règle la valeur (θa) d'angle d'avance de commande en fonction de l'état de fonctionnement de l'élément (13) d'ouverture et de fermeture détecté par l'unité (513) de détection d'état de fonctionnement,
le dispositif (50) de commande de moteur étant **caractérisé en ce que**
la valeur (θa) d'angle d'avance de commande est calculée en ajoutant une valeur ($\theta$c) d'angle d'avance supplémentaire à une valeur ($\theta$b) d'angle d'avance de base qui est une valeur fixe définie à l'avance, et l'unité (514) de réglage de la valeur d'angle d'avance règle la valeur ($\theta$c) d'angle d'avance supplémentaire en fonction de l'état de fonctionnement de l'élément (13) d'ouverture et de fermeture détecté par l'unité (513) de détection d'état de fonctionnement.

2. Le dispositif (50) de commande de moteur selon la revendication 1, dans lequel l'unité (513) de détection d'état de fonctionnement détecte une vitesse (Va) de fonctionnement réelle de l'élément (13) d'ouverture et de fermeture, et
l'unité (514) de réglage de la valeur d'angle d'avance règle la valeur ($\theta$a) d'angle d'avance de commande en fonction de la vitesse (Va) de fonctionnement réelle de l'élément (13) d'ouverture et de fermeture détectée par l'unité (513) de détection d'état de fonctionnement.

3. Le dispositif (50) de commande de moteur selon la revendication 2, dans lequel :

l'unité (513) de détection d'état de fonctionnement détecte une charge de l'élément (13) d'ouverture et de fermeture, et
l'unité (514) de réglage de la valeur d'angle d'avance règle la valeur ($\theta$a) d'angle d'avance de commande en fonction de la charge de l'élément (13) d'ouverture et de fermeture détectée par l'unité (513) de détection d'état de fonctionnement.

4. Le dispositif (50) de commande de moteur selon la revendication 1, dans lequel :
l'unité (514) de réglage de la valeur d'angle d'avance calcule la valeur ($\theta$c) d'angle d'avance supplémentaire en utilisant une valeur ($\theta$d) d'angle d'avance de vitesse basée sur une vitesse (Va) de fonctionnement réelle de l'élément (13) d'ouverture et de fermeture.

5. Le dispositif (50) de commande de moteur selon la revendication 4, dans lequel :
l'unité (514) de réglage de la valeur d'angle d'avance calcule la valeur ($\theta$d) de l'angle d'avance de vitesse en multipliant la vitesse (Va) de fonctionnement réelle de l'élément (13) d'ouverture et de fermeture par un rapport d'angle d'avance de vitesse prédéfini en fonction de la vitesse (Va) de fonctionnement réelle de l'élément (13) d'ouverture et de fermeture.

6. Le dispositif (50) de commande de moteur selon la revendication 4, comprenant : un capteur (61) d'angle de rotation, détectant un angle de rotation du moteur d'entraînement (60),
l'unité (514) de réglage de la valeur d'angle d'avance calculant la valeur ($\theta$d) d'angle d'avance de vitesse obtenue en multipliant une période d'un signal de sortie du capteur (61) d'angle de rotation par un premier rapport (Ra) d'angle d'avance de vitesse défini à l'avance en fonction d'une période du signal de sortie du capteur (61) d'angle de rotation.

7. Le dispositif (50) de commande de moteur selon la revendication 1, dans lequel :
l'unité (514) de réglage de la valeur d'angle d'avance calcule la valeur ($\theta$c) d'angle d'avance supplémentaire en utilisant une première valeur ($\theta$e) d'angle d'avance de charge obtenue en multipliant un rapport cyclique de sortie (Sa) de la puissance d'entraînement par un premier rapport (Rc) d'angle d'avance de charge défini à l'avance en fonction du rapport cyclique de sortie (Sa) de la puissance d'entraînement.

8. Le dispositif (50) de commande de moteur selon la revendication 1, dans lequel :
l'unité (514) de réglage de la valeur d'angle d'avance calcule la valeur ($\theta$c) d'angle d'avance supplémentaire en utilisant une deuxième valeur ($\theta$f) d'angle d'avance de charge obtenue en multipliant un courant de fonctionnement du moteur d'entraînement par un deuxième rapport d'angle d'avance de charge défini à l'avance en fonction du courant de fonctionnement du moteur d'entraînement (60).

9. Le dispositif (50) de commande de moteur selon la revendication 7, dans lequel :
l'unité (514) de réglage de la valeur d'angle d'avance calcule la valeur ($\theta$c) d'angle d'avance supplémentaire en ajoutant la première valeur ($\theta$e) d'angle d'avance de charge à une valeur ($\theta$d) d'angle d'avance de vitesse basée sur une vitesse (Va) de fonctionnement réelle de l'élément (13) d'ouverture et de fermeture.

10. Le dispositif (50) de commande de moteur selon la revendication 8, dans lequel :
l'unité (514) de réglage de la valeur d'angle d'avance calcule la valeur ($\theta$c) d'angle d'avance supplémentaire en ajoutant la deuxième valeur ($\theta$f) d'angle d'avance de charge à une valeur ($\theta$d) d'angle d'avance de vitesse basée sur une vitesse (Va) de fonctionnement réelle de l'élément (13) d'ouverture et de fermeture.

11. Le dispositif (50) de commande de moteur selon la revendication 7, dans lequel :
l'unité (514) de réglage de la valeur d'angle d'avance calcule la valeur ($\theta$c) d'angle d'avance supplémentaire en divisant la première valeur ($\theta$e) d'angle d'avance de charge par une valeur ($\theta$d) d'angle

d'avance de vitesse basée sur une vitesse (Va) de fonctionnement réelle de l'élément (13) d'ouverture et de fermeture.

12. Le dispositif (50) de commande de moteur selon la revendication 8, dans lequel :
l'unité (514) de réglage de la valeur d'angle d'avance calcule la valeur (θc) d'angle d'avance supplémentaire en divisant la deuxième valeur (θf) d'angle d'avance de charge par une valeur (θd) d'angle d'avance de vitesse basée sur une vitesse (Va) de fonctionnement réelle de l'élément (13) d'ouverture et de fermeture.

13. Le dispositif (50) de commande de moteur selon la revendication 1, dans lequel :

l'unité (513) de détection d'état de fonctionnement détecte dans quelle zone de commande d'une pluralité de zones de commande (AO à A7) définies dans une zone de fonctionnement de l'élément (13) d'ouverture et de fermeture se trouve l'élément (13) d'ouverture et de fermeture, et
l'unité (514) de réglage de la valeur d'angle d'avance règle la valeur (θa) d'angle d'avance de commande en fonction de la zone de commande où se trouve l'élément (13) d'ouverture et de fermeture.

14. Le dispositif (50) de commande de moteur selon la revendication 1, dans lequel l'unité (514) de réglage de la valeur d'angle d'avance exerce, pendant une période de démarrage du moteur d'entraînement (60), une commande de réglage de démarrage différente de la commande de réglage normale qui définit la valeur (θa) d'angle d'avance de commande en fonction de l'état de fonctionnement de l'élément (13) d'ouverture et de fermeture.

15. Le dispositif (50) de commande de moteur selon la revendication 14, dans lequel l'unité (514) de réglage de la valeur d'angle d'avance augmente progressivement la valeur (θa) d'angle d'avance de commande pendant la période de démarrage du moteur d'entraînement (60) par le biais de la commande de réglage de démarrage.

13(fully closed position)

13(fully open position)

vehicle front ◄─────────────────────────► vehicle rear

# FIG. 1

EP 4 622 092 B1

FIG. 2

FIG. 3

EP 4 622 092 B1

EP 4 622 092 B1

## FIG. 4

FIG. 5

EP 4 622 092 B1

```
                    ┌─────────────┐
                    │    Start    │
                    └──────┬──────┘
                           │
           ┌───────────────▼────────────────┐
           │ Set a control advance angle     │   S01
           │ valueθa to a basic advance      │
           │ angle valueθb                   │
           └───────────────┬────────────────┘
                           │
           ┌───────────────▼────────────────┐   S02
           │     Operate a drive motor       │
           └───────────────┬────────────────┘
                           │
           ┌───────────────▼────────────────┐   S03
           │ Calculate an actual operation speed Va │
           └───────────────┬────────────────┘
                           │
           ┌───────────────▼────────────────┐   S04
           │ Calculate an additional advance angle value θc │
           └───────────────┬────────────────┘
                           │
                         S05
                       ◇─────────◇   Yes                S08
                      │  θc > θm ?  ├──────────┐   ┌──────────────────────────┐
                       ◇─────────◇           └──▶│ Set the additional advance │
                           │                      │ angle value θc to an upper │
                          No                      │ limit value θm             │
                           │                      └────────────┬─────────────┘
                           │◀──────────────────────────────────┘
           ┌───────────────▼────────────────┐   S06
           │ Change the control advance angle value θa │
           └───────────────┬────────────────┘
                           │
           ┌───────────────▼────────────────┐   S07
           │ Change control of the drive motor │
           └───────────────┬────────────────┘
                           │
                    ┌──────▼──────┐
                    │   Return    │
                    └─────────────┘
```

# FIG. 6

| Actual operation speed [mm/s] | Additional advance angle value θc [deg] |
|---|---|
| 0 to less than 50 | 0 |
| 50 to less than 100 | 5 |
| 100 to less than 150 | 10 |
| 150 to less than 200 | 15 |
| 200 to less than 250 | 20 |
| 250~ | 25 |

# FIG. 7A

| Actual operation speed [mm/s] | Control advance angle Value θa [deg] |
|---|---|
| 0 to less than 50 | 10 |
| 50 to less than 100 | 15 |
| 100 to less than 150 | 20 |
| 150 to less than 200 | 25 |
| 200 to less than 250 | 30 |
| 250~ | 35 |

# FIG. 7B

High

Output duty (load) Sa [%]

| θk51 (A51) | θk52 (A52) | θk53 (A53) | θk54 (A54) | θk55 (A55) |
| θk41 (A41) | θk43 (A42) | θk43 (A43) | θk44 (A44) | θk45 (A45) |
| θk31 (A31) | θk32 (A32) | θk33 (A33) | θk34 (A34) | θk35 (A35) |
| θk21 (A21) | θk22 (A22) | θk23 (A23) | θk24 (A24) | θk25 (A25) |
| θk11 (A11) | θk12 (A12) | θk13 (A13) | θk14 (A14) | θk15 (A15) |

Low    V1                                                        High

Actual operation speed Va [mm/s]

FIG. 8

FIG. 9

Sliding door
(drive motor)
stoppage state

Transition condition 1
(operation start
condition)
established

Transition condition 3
(operation stoppage
condition)
established

Startup setting
control (startup
period)

Normal setting control
(excluding startup
period)

Transition condition 2
established

# FIG. 10

FIG. 11

**EP 4 622 092 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6939447 B

- US 2020291705 A1